# EUROPEAN PATENT APPLICATION

(11) **EP 3 698 933 A1**
(43) Date of publication of application: **26.08.2020**
(21) Application number: 19158647.8
(22) Date of filing: 21.02.2019
(51) Int. Cl.: B29B 11/16, B29C 70/20, B29C 70/50, B29B 15/12, B29L 31/34

(54) **HYBRID UNIDIRECTIONAL TAPES, PARTS INCLUDING THE SAME, AND METHODS OF MAKING SUCH TAPES AND PARTS**

(71) Applicant: SABIC Global Technologies B.V., 4612 PX Bergen op Zoom (NL)
(72) Inventor: KOURKOUTSAKI, Theodosia, 4612 PX Bergen op Zoom (NL); PICARD, Philipp, 4612 PX Bergen op Zoom (NL); THEOFANOUS, Theofanis, 4612 PX Bergen op Zoom (NL)
(74) Representative: J A Kemp LLP

(57) **Abstract**

Some unidirectional (UD) tapes (10a) include a matrix material and fibers that are dispersed within the matrix material, the fibers including fibers (14a) of a first type and fibers (14b) of a second type that is distinct from the first type, wherein the fibers are positioned such that a cross-section of the tape, taken perpendicularly to the length of the tape, includes one or more first fiber regions (26) in which at least 90% of the fibers are of the first type and one or more second fiber regions (30a, 30b) in which at least 90% of the fibers are of the second type, wherein each of the fiber regions has a width that is greater than or equal to 3 millimeters (mm), and wherein the width of at least one of the first fiber region(s) is at least 2 times larger than the width of at least one of the second fiber region(s).

## Description

### FIELD OF INVENTION

The present invention relates generally to fiber-reinforced composites and, more specifically, to unidirectional tapes having two or more distinct types of fibers. Such tapes can be used to make a part that exhibits different properties in different portions thereof.

### BACKGROUND

Fiber-reinforced composites can be used to form structures having advantageous structural characteristics, such as high strengths and high stiffnesses, as well as relatively low weights, when compared to structures formed from conventional materials. As a result, fiber-reinforced composites are used in a wide variety of applications across a wide range of industries, including the automotive, aerospace, and consumer electronics industries.

The type of fibers used in such a fiber-reinforced composite can affect the properties (e.g., strength, stiffness, and radio frequency (RF) transparency) thereof. For example, composites that incorporate glass fibers may be RF transparent (e.g., to permit transmission of RF signals) and damage-resistant, but may not be as stiff as composites that incorporate carbon fibers, which may be electrically- and thermally-conductive but not RF transparent. The appropriate fiber type can be selected based on the desired characteristics of a part to be formed from the composite.

The intended use of a part may sometimes dictate that different portions of the part should exhibit different properties. One solution to provide such localized variations in part properties is to produce and join at least two separate tapes, each having fibers of a type that is distinct from the type of fibers incorporated in the other tapes. For example, a glass fiber tape may be used to define a portion of the part that should be RF transparent, while a carbon fiber tape may be used to define a portion of the part that should have high stiffness. However, this approach can pose challenges. The different tapes may have different thicknesses and it may be difficult to precisely position the tapes for bonding. As such, parts made in this way may not be of consistent quality. In some instances, one of the different tapes may need to be relatively narrow to satisfy the part's design requirements. Because tape width can govern the throughput of the process, parts that require such narrow tapes can be inefficient to produce. There accordingly is a need in the art for tapes that can be used to efficiently and consistently produce parts having localized variations in properties.

### SUMMARY

The present tapes address this need in the art at least by incorporating two or more distinct types of fibers. The fibers can be positioned such that a cross-section of the tape includes at least one or more first fiber regions in which substantially all (e.g., at least 90%) of the fibers are of a first type and one or more second fiber regions in which substantially all (e.g., at least 90%) of the fibers are of a second type distinct from the first type. Each of the first and second fiber regions can have a width suitable for making a part with different characteristics in different portions thereof (e.g., each of the regions having a width that is greater than or equal to 3 millimeters, at least one of the first fiber region(s) having a width that is at least 2 times larger than the width of at least one of the second fiber region(s), and/or the like).

A part can be produced from the tape at least by shaping the tape to achieve a desired part configuration. The tape can be shaped such that at least one of the first fiber region(s) defines a first portion of the part and at least one of the second fiber region(s) defines a second portion of the part. To illustrate, in some embodiments, the tape can be bent along its length to angularly dispose at least a portion of one of the second fiber region(s) relative to at least a portion of one of the first fiber region(s) that is adjacent to the second fiber region to form a portable electronic device (PED) housing. The PED housing can comprise a planar portion and a lip that extends from the planar portion, where the angularly disposed second fiber region can form at least a portion of the lip and the adjacent first fiber region can form at least a portion of the planar portion. Because substantially all of the fibers in the first fiber region(s) are of a distinct type from substantially all of the fibers in the second fiber region(s), the different portions of the part may exhibit different characteristics.

Methods of making a part from such a tape can be more efficient and consistent compared to conventional methods in which different tapes are bonded together. Because a single tape can be used to form the part, there is no need to precisely align different tapes for bonding. Additionally, because the tape can be manufactured in a single tape-making process, the thickness variations between the different fiber regions can be less than those that exist between different tapes. This can improve the quality of the part. And, parts that require at least one of the fiber regions to be relatively narrow can be produced more efficiently than if a separate narrow tape were used, at least because the overall width of the tape is larger than that of each of the fiber regions; as such, the process is not subject to the same throughput restrictions as conventional methods.

The term "coupled" is defined as connected, although not necessarily directly, and not necessarily mechanically; two items that are "coupled" may be unitary with each other. The terms "a" and "an" are defined as one or more unless this disclosure explicitly requires otherwise. The term "substantially" is defined as largely but not necessarily wholly what is specified (and includes what is specified; e.g., substantially 90 degrees includes 90 degrees and substantially parallel includes parallel), as understood by a person of ordinary skill in the art. In any disclosed embodiment, the terms "substantially" and "approximately" may be substituted with "within [a percentage] of" what is specified, where the percentage includes .1, 1, 5, and 10 percent.

The phrase "and/or" means and or or. To illustrate, A, B, and/or C includes: A alone, B alone, C alone, a combination of A and B, a combination of A and C, a combination of B and C, or a combination of A, B, and C. In other words, "and/or" operates as an inclusive or.

Further, a device or system that is configured in a certain way is configured in at least that way, but it can also be configured in other ways than those specifically described.

The terms "comprise" (and any form of comprise, such as "comprises" and "comprising"), "have" (and any form of have, such as "has" and "having"), and "include" (and any form of include, such as "includes" and "including") are open-ended linking verbs. As a result, an apparatus that "comprises," "has," or "includes" one or more elements possesses those one or more elements, but is not limited to possessing only those one or more elements. Likewise, a method that "comprises," "has," or "includes" one or more steps possesses those one or more steps, but is not limited to possessing only those one or more steps.

Any embodiment of any of the apparatuses, systems, and methods can consist of or consist essentially of - rather than comprise/have/include - any of the described steps, elements, and/or features. Thus, in any of the claims, the term "consisting of' or "consisting essentially of' can be substituted for any of the open-ended linking verbs recited above, in order to change the scope of a given claim from what it would otherwise be using the open-ended linking verb.

The feature or features of one embodiment may be applied to other embodiments, even though not described or illustrated, unless expressly prohibited by this disclosure or the nature of the embodiments.

Some details associated with the embodiments are described above, and others are described below.

### BRIEF DESCRIPTION OF THE DRAWINGS

The following drawings illustrate by way of example and not limitation. For the sake of brevity and clarity, every feature of a given structure is not always labeled in every figure in which that structure appears. Identical reference numbers do not necessarily indicate an identical structure. Rather, the same reference number may be used to indicate a similar feature or a feature with similar functionality, as may non-identical reference numbers.
**FIG. 1A** is a top view of a first embodiment of the present tapes having a plurality of fibers dispersed in a polymeric matrix material, where the fibers are positioned such that a cross-section of the tape includes a single first fiber region in which at least 90% of the fibers are of a first type and two second fiber regions in which at least 90% of the fibers are of a second type that is distinct from the first type.
**FIG. 1B** is a cross-sectional end view of the tape of FIG. 1A, taken along line 1B-1B of FIG. 1A.
**FIG. 2A** is a top view of a second embodiment of the present tapes that is substantially similar to the tape of FIG. 1A, except that the fibers comprise fibers of a third type that is distinct from the first and second types and are positioned such that a cross-section of the tape includes two third fiber regions in which at least 90% of the fibers are of the third type.
**FIG. 2B** is a cross-sectional end view of the tape of FIG. 2A, taken along line 2B-2B of FIG. 2A.
**FIG. 3** is a cross-sectional end view of a third embodiment of the present tapes that is substantially similar to the tape of FIG. 1A, except that the fibers are positioned such that the tape includes three second fiber regions, where the first fiber region and one of the second fiber regions do not extend across the entire thickness of the cross-section.
**FIG. 4A** is a schematic of a system that can be used to make some of the present tapes and includes two or more spools, a spreading unit, an impregnation unit, and a roll for collecting a tape.
**FIG. 4B** is a top view of the spreading unit of the system of FIG. 4A.
**FIGs. 5A-5C** illustrate a first embodiment of the present methods of making a part in which one of the present tapes is bent along its length.
**FIGs. 6A** and **6B** are top and perspective views, respectively, of a PED housing made according to the method illustrated in FIGs. 5A-5C.
**FIG. 6C** is a cross-sectional end view of the PED housing of FIG. 6A, taken along line 6C-6C of FIG. 6A.
**FIGs. 7A-7C** illustrate a second embodiment of the present methods of making a part in which two of the present tapes are layered, and each of the tapes is bent along its length.
**FIGs. 8A** and **8B** are top and perspective views, respectively, of a PED housing made according to the method illustrated in FIGs. 7A-7C.
**FIGs. 9A** and **9B** illustrate a third embodiment of the present methods of making a part that is substantially similar to the method illustrated in FIGs. 7A-7C, except that the second fiber regions of each of the tapes define at least a portion of the planar portion of the PED housing and the first fiber regions of each of the tapes partially overlap to define a transmission region (shown in dashed lines) that is RF transparent.
**FIGs. 10A** and **10B** are first and second example tapes that were made according to some of the present methods. The first tape had carbon fibers and glass fibers and the second tape had ceramic fibers and glass fibers.

### DETAILED DESCRIPTION

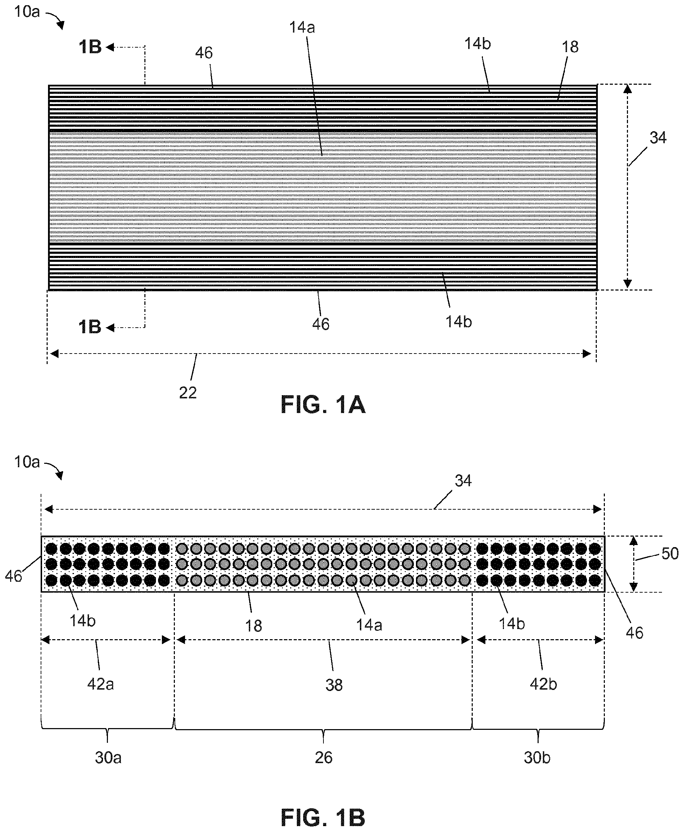

Referring to FIGs. 1A and 1B, shown is a first embodiment 10a of a hybrid tape comprising a plurality of fibers (e.g., 14a and 14b) dispersed within a polymeric matrix material 18. Tape 10a can be a unidirectional (UD) tape. The fibers can be of different types; for example, fibers 14a can be of a first type and fibers 14b can be of a second type that is distinct from the first type.

Suitable fiber types can include, for example, carbon fibers, glass fibers, aramid fibers, polymer (e.g., polyethylene, polyester, or polyamide) fibers, ceramic fibers, basalt fibers, steel fibers, natural fibers (e.g., bamboo, sugar cane bagasse, jute, kenaf, flax, grass, sisal, hemp, coir, ramie, or abaca fibers), or the like. Fibers 14a and/or 14b can be relatively: (1) RF transparent (e.g., comprising glass, ceramic, natural, polymer, aramid, or the like fibers); (2) tough (e.g., comprising glass, aramid, or the like fibers); (3) stiff (e.g., comprising carbon, ceramic, or the like fibers); (4) electrically-conductive (e.g., comprising carbon or the like fibers); (5) electrically-insulative (e.g., comprising glass, ceramic, natural, polymer, aramid, or the like fibers); (6) thermally-conductive (e.g., comprising carbon or the like fibers); (7) thermally-insulative (e.g., comprising glass, ceramic, natural, polymer, aramid, or the like fibers); (8) corrosion-resistant (e.g., comprising glass or the like fibers); and/or (9) inexpensive (e.g., comprising glass or the like fibers).

And by selecting fibers 14a and/or 14b, different portions of tape 10a can have different ones of these properties. To illustrate, one of fibers 14a and 14b (e.g., 14a) may be relatively RF transparent, comprising, for example, glass or ceramic fibers, and the other of fibers 14a and 14b (e.g., 14b) may be relatively stiff, comprising, for example, carbon or ceramic fibers. To further illustrate, one of fibers 14a and 14b (e.g., 14b) can have a modulus of elasticity that is at least 1.10, 1.15, 1.20, 1.25, 1.30, 1.35, 1.40, 1.45, 1.50, 1.55, 1.60, 1.65, 1.70, 1.75, 1.80, 1.85, 1.90, or 2.00 (e.g., at least 1.25 times) a modulus of elasticity of the other of fibers 14a and 14b (e.g., 14a); for example, fibers 14b can comprise carbon or ceramic fibers, and fibers 14a can comprise glass fibers. Either of such illustrative tapes may be particularly suited for use in, for example, a PED housing: relatively RF transparent fibers can be positioned to facilitate PED signal receipt/transmission (e.g., along a back of the housing) and relatively stiff fibers can be positioned to stiffen the PED housing (e.g., along one or more sides of the housing). Other tapes can include any suitable combination of fiber types.

Matrix material 18 can include thermoplastic and/or thermoset materials. For example, a suitable thermoplastic material can include polyethylene terephthalate, polycarbonate (PC), polybutylene terephthalate (PBT), poly(1,4-cyclohexylidene cyclohexane-1,4-dicarboxylate) (PCCD), glycol-modified polycyclohexyl terephthalate (PCTG), poly(phenylene oxide) (PPO), polypropylene (PP), polyethylene (PE), polyvinyl chloride (PVC), polystyrene (PS), polymethyl methacrylate (PMMA), polyethyleneimine or polyetherimide (PEI) or a derivative thereof, a thermoplastic elastomer (TPE), a terephthalic acid (TPA) elastomer, poly(cyclohexanedimethylene terephthalate) (PCT), polyethylene naphthalate (PEN), a polyamide (PA), polystyrene sulfonate (PSS), polyether ether ketone (PEEK), polyether ketone ketone (PEKK), acrylonitrile butyldiene styrene (ABS), polyphenylene sulfide (PPS), a copolymer thereof, or a blend thereof. For further example, a suitable thermoset material can include an unsaturated polyester resin, a polyurethane, bakelite, duroplast, urea-formaldehyde, diallyl-phthalate, epoxy resin, an epoxy vinylester, a polyimide, a cyanate ester of a polycyanurate, dicyclopentadiene, a phenolic, a benzoxazine, a co-polymer thereof, or a blend thereof.

As discussed above, the fibers can be positioned in tape 10a such that different portions of the tape exhibit different characteristics. To illustrate, a cross-section of tape 10a, taken perpendicularly to length 22 of the tape, can include one, two, three, four, five, six, or more first fiber regions (e.g., 26), and one, two, three, four, five, six, or more second fiber regions (e.g., 30a and 30b) (FIG. 1B). Substantially all (e.g., at least 90%) of the fibers in each of the first fiber region(s) can be of the first type (e.g., fibers 14a) and substantially all (e.g., at least 90%) of the fibers in each of the second fiber region(s) can be of the second type (e.g., fibers 14b). As shown, a cross-section of tape 10a includes a single first fiber region 26 in which at least 90% of the fibers are fibers 14a and two second fiber regions 30a and 30b in which at least 90% of the fibers are fibers 14b. The characteristics of tape 10a within first fiber region 26 may differ from those within each of second fiber regions 30a and 30b, at least in part because the fiber regions have different fiber compositions.

The first and second fiber regions can be arranged and have dimensions appropriate for making a hybrid part from tape 10a (described in further detail below). For example, each of the first and second fiber regions can have a width (e.g., 38, 42a, or 42b), measured in a direction parallel with width 34 of the cross-section, that is: (1) greater than or equal to any one of, or between any two of: 3, 5, 7, 10, 15, 20, 50, 100, 150, or 200 mm; and/or (2) greater than or equal to any one of, or between any two of: 5, 10, 15, 20, 25, 30, 35, 40, 45, 50, 55, or 60% (e.g., between 5% and 20% or greater than or equal to 60%) of width 34.

For at least one of (e.g., each of) edges 46 of tape 10a, one of the second fiber regions can extend to the edge. As shown, for example, each of second fiber regions 30a and 30b can have a width (e.g., 42a and 42b, respectively) that is less than or equal to 15 mm and/or less than or equal to 25% (e.g., less than or equal to 20, 15, or 10%) of width 34 and can extend to a respective one of edges 46 such that first fiber region 26 is disposed therebetween. The width of first fiber region 26 can be greater than or equal to any one of, or between any two of: 1.1, 1.2, 1.3, 1.4, 1.5, 1.6, 1.7, 1.8, 1.9, 2.0, 2.1, 2.2, 2.3, 2.4, or 2.5 times (e.g., at least 2.0 times) the width of at least one of second fiber regions 30a and 30b. Such positioning and/or sizing of second fiber regions 30a and 30b can, for example, facilitate use of tape 10a in a PED housing as described in more detail below.

At least one of (e.g., each of) the first and second fiber regions can, but need not, extend across thickness 50 of the cross-section. The illustrated arrangement of first and second fiber regions is provided by way of illustration; in other embodiments, the first and second fiber regions can be arranged in any suitable manner, whether symmetric or asymmetric, e.g., depending on the intended use of the tape.

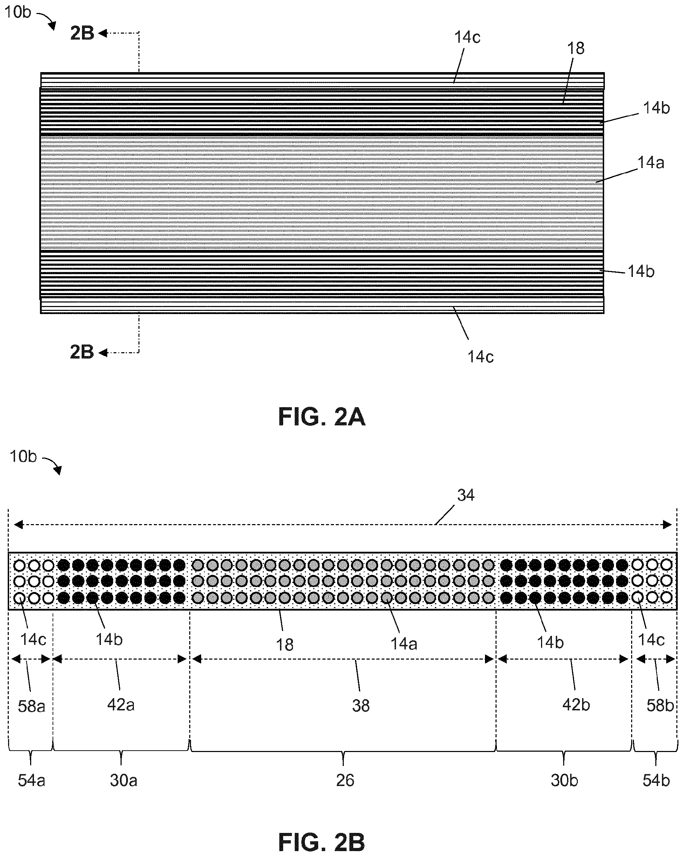

Some tapes can include, in addition to the first and second fiber regions, other fiber region(s) in which substantially all of the fibers are of a type distinct from the first and second types. For example and referring to FIGs. 2A and 2B, shown is a tape 10b that is substantially similar to tape 10a, the primary exception being that tape 10b has one, two, three, four, five, six, or more third fiber regions. As depicted, tape 10b has two third fiber regions 54a and 54b, each having a width (e.g., 58a and 58b, respectively) that is greater than or equal to 3 mm and, optionally, is less than or equal to 15 mm and/or is less than or equal to 25% of width 34. Substantially all (e.g., at least 90%) of the fibers in third fiber regions 54a and 54b can be fibers of a third type (e.g., fibers 14c) that is distinct from each of the first and second types. Fibers 14c can be of any of the types described above with respect to fibers 14a and 14b.

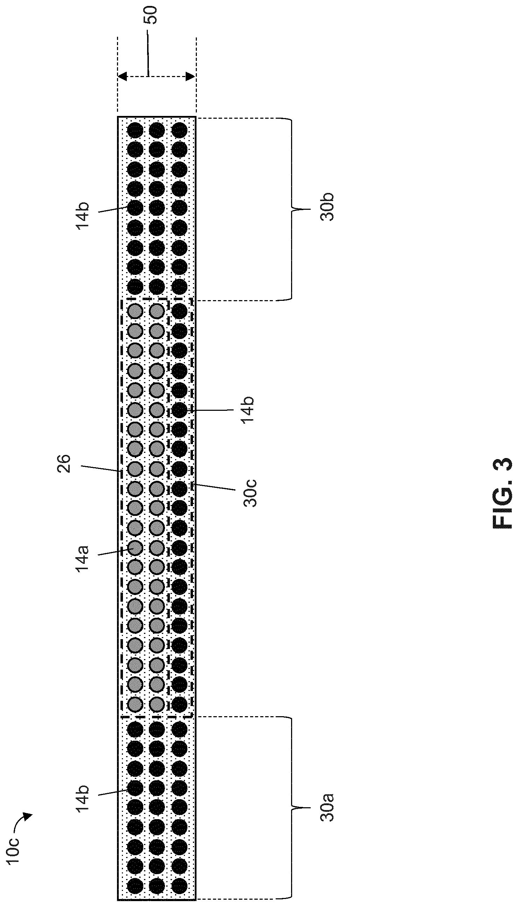

While in tapes 10a and 10b, each of the first, second, and third fiber regions extends across thickness 50 of the cross-section, in some embodiments, one or more of the fiber regions need not extend across the thickness, e.g., can have a thickness, measured in a direction parallel to thickness 50, that is less than or equal to any one of, or between any two of: 90, 80, 70, 60, 50, 40, 30, or 20% of thickness 50. FIG. 3, for example, depicts a tape 10c that is substantially similar to tape 10a, the primary exception being that a cross-section of tape 10c includes three second fiber regions 30a-30c, where neither first fiber region 26 nor second fiber region 30c extends across all of thickness 50. To illustrate, first fiber region 26 can be disposed on second fiber region 30c, in a direction parallel with thickness 50, such that the combined thickness of the first fiber region and second fiber region 30c is substantially the same as thickness 50. The widths of first fiber region 26 and second fiber region 30c can, but need not, be substantially the same.

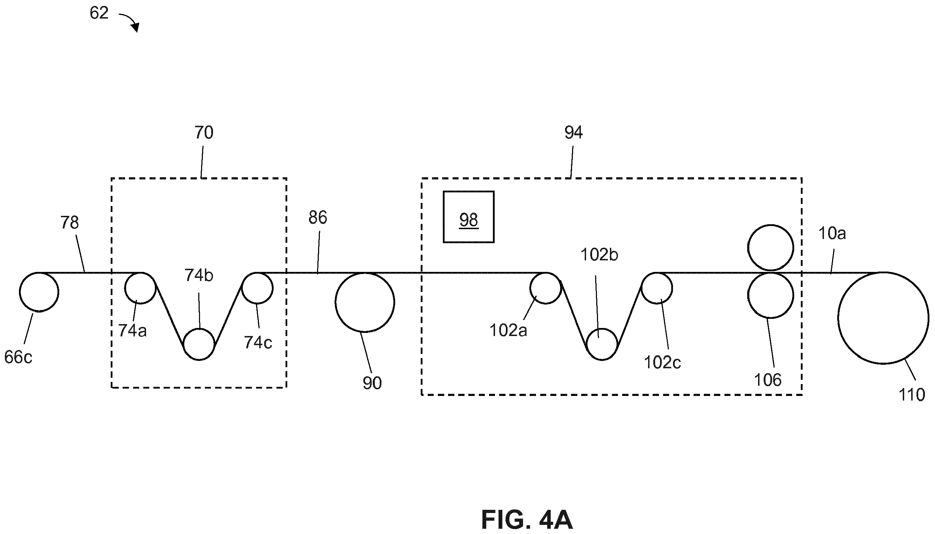

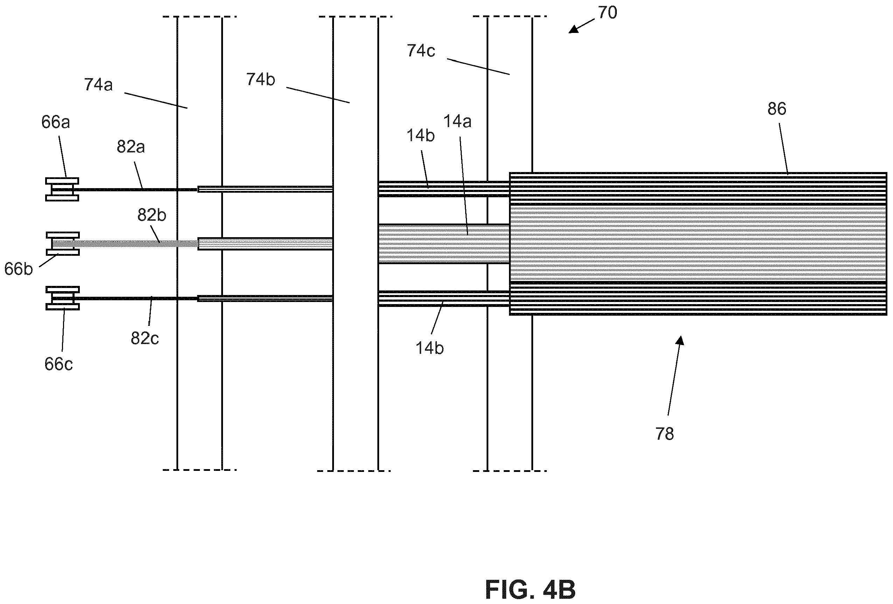

Referring to FIGs. 4A and 4B, shown is a schematic of a system 62 that can be used to perform some of the present methods of making a hybrid UD tape (e.g., 10a-10c). While system 62 is referenced to illustrate at least some such methods, system 62 is not limiting on those methods, which can be performed using any suitable system.

Some methods of making a UD tape include a step of positioning two or more strands (e.g., 78) of fibers (e.g., 14a-14c) adjacent to one another. The strands can include strands of different fiber types (e.g., any of those described above), such as, for example, two, three, four, five, six, seven, or more different fiber types. To illustrate, the strands can include one or more first strands comprising fibers of a first type (e.g., fibers 14a) (e.g., glass fibers), one or more second strands comprising fibers of a second type that is distinct from the first type (e.g., fibers 14b) (e.g., carbon or ceramic fibers), and/or one or more third strands comprising fibers of third type that is distinct from the first and second types (e.g., fibers 14c).

The fibers can be positioned at least by unwinding the strands from two or more spools (e.g., 66a-66c) of fiber bundles (e.g., 82a-82c) and spreading the fiber bundles to achieve the desired arrangement of fibers. For each of the bundles, substantially all of the fibers can be of a single type (e.g., the first type, second type, or third type). The unwound fiber bundles can be passed through a spreading unit (e.g., 70) comprising one or more spreading elements (e.g., 74a-74c) that are configured to spread the bundles into one or more spreaded fiber layers (e.g., 86) (FIG. 4B). Each of the spreading elements can have any suitable shape and can be movable relative to the fibers in any suitable manner to facilitate fiber spreading. For example, each of the spreading elements can be a bar (e.g., rod-shaped) or a plate having a convex surface and, optionally, can be configured to translate (e.g., in a direction substantially aligned with the longitudinal axis of the spreading element) and/or rotate (e.g., about the longitudinal axis of the spreading element) such that the fiber bundles spread as they pass along the spreading element. The translation and/or rotation of the spreading elements can be oscillatory. Each of the resulting spreaded fiber layer(s) can comprise the strands of fibers of different types, which can be positioned as desired for the tape. For example, as shown, the fibers are positioned such that substantially all of the fibers of the first type are disposed between first and second pluralities of fibers of the second type.

Some methods include a step of making a UD tape at least by introducing a polymeric matrix material (e.g., any of those described above) to the fibers of the strands. The matrix material can be introduced to the fibers in an impregnation unit (e.g., 94). To do so, the spreaded fiber layer(s) can be guided to the impregnation unit (e.g., via roller 90), and an extruder (e.g., 98) can supply a film of the matrix material to the spreaded fiber layer(s) (before or after which, if there are two or more spreaded fiber layers, the layers can be brought together); however, in other embodiments, the matrix material can be provided to the spreaded fiber layer(s) using any suitable structure. For example, the matrix material can be introduced to the fibers at least by passing the spreaded fiber layer(s) through a matrix material bath. The matrix material and the fibers can be pressed together by passing them over or under and in contact with each of one or more pressing elements (e.g., 102a-102c), each of which can comprise a roller, a pin, a plate, or the like. Additionally or alternatively, the matrix material and the fibers can be pressed together with consolidation rollers (e.g., 106). The pressing element(s) and/or consolidation rollers can be heated, and/or a heater can heat the spreaded fiber layer(s) and the matrix material, to facilitate impregnation. By pressing the matrix material and fibers together, the fibers can be consolidated to form a UD tape (e.g., 10a-10c) which can be collected on a roll (e.g., 110). The method can be a roll-to-roll process, e.g., such that the UD tape is coupled to the spools via the strands.

In some methods, the polymeric matrix material can be introduced to the fibers at least by including polymeric fibers in the strands, e.g., the first, second, and/or third strands can comprise polymeric fibers (e.g., alone or in addition to other fibers). In some such methods, a matrix material need not be applied to the spreaded fiber layer(s) via an extruder and/or bath. During impregnation, the polymeric fibers can melt as the spreaded fiber layer(s) are heated to form the polymeric matrix material.

Positioning and introducing the matrix material to the fibers can be performed such that the tape has a cross-section, taken perpendicularly to the length of the tape, with two more fiber regions, in each of which substantially all of the fibers are of a type that is different than that of substantially all of the fibers in at least one other of the fiber regions. For example, the cross-section can include one or more first fiber regions in which at least 90% of the fibers are of the first type, one or more second fiber regions in which at least 90% of the fibers are of the second type, and/or one or more third fiber regions in which at least 90% of the fibers are of the third type. The dimensions and arrangement of the fiber regions can be any of those described above with respect to tapes 10a-10c (e.g., each can have a width, measured in a direction aligned with the width of the cross-section, that is greater than or equal to 3 mm). As shown, the resulting tape is tape 10a.

Some of the present tapes (e.g., 10a-10c) can be used to make a hybrid part (e.g., 118a-118c). The intended use of a part may dictate that different portions of the part should have different properties, such as RF transparency, stiffness, strength, electrical conductivity, thermal conductivity, and the like. For example, certain portions of a part may need to be RF transparent (e.g., to permit transmission of RF signals) while other portions may need to be comparatively stiff and/or strong (e.g., to resist bending and/or damage). When the part is made from composite materials, the desired properties can be attained at least by selecting appropriate fibers for the composites. To illustrate, glass fibers can provide RF transparency while carbon fibers can provide a comparatively higher stiffness. One or more of the present tapes can be shaped and/or sized to form the part such that the different fiber regions of the tape(s) provide the desired localized variations in part characteristics.

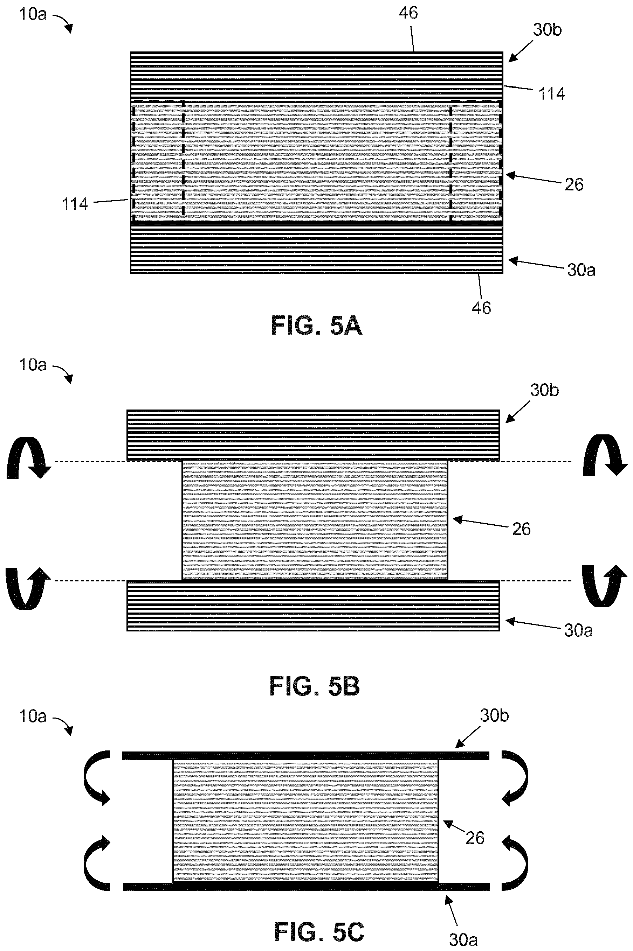

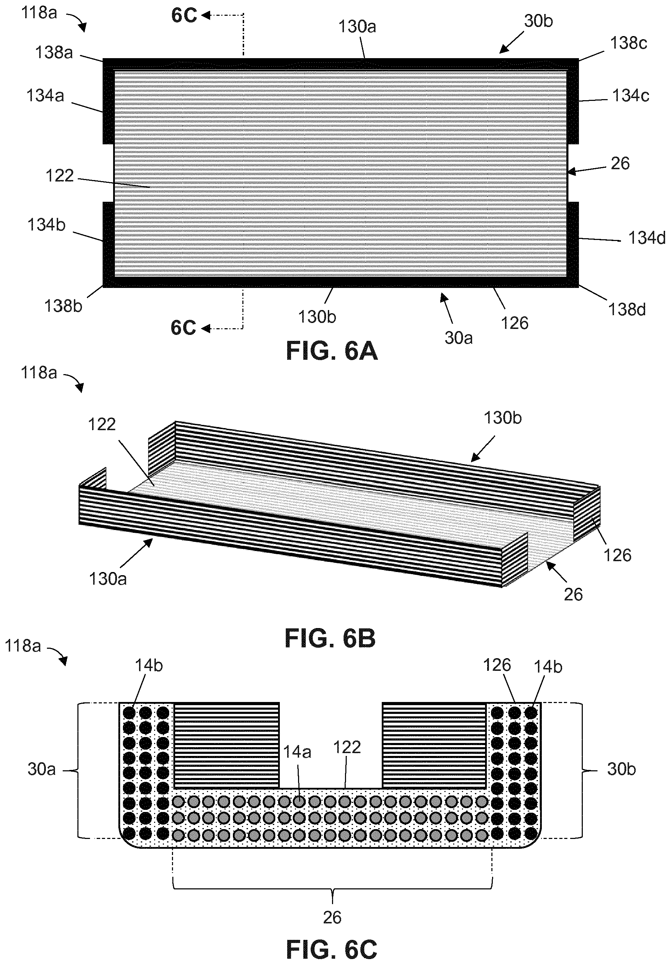

To illustrate with reference to FIGs. 5A-5C and 6A-6C, some methods of making a part can include a step of shaping one of the present tapes at least by bending the tape along its length. As shown, tape 10a is shaped and/or sized to form a PED housing that comprises a planar portion (e.g., 122) and a lip (e.g., 126) that extends from the planar portion (FIGs. 6A-6C); however, in other embodiments, any suitable part can be made using any of the present tapes.

To facilitate shaping, one or more portions of the tape (e.g., a portion along each of its widthwise edges (e.g., 114)) can be removed before the tape is bent (FIG. 5A). The width of each of the removed portion(s) can be less than or equal to any one of, or between any two of: 90, 80, 70, 60, 50, 40, 30, or 20% of the width of the tape. The tape can be heated (e.g., to facilitate bending) and thereafter bent such that, for at least one of the second fiber region(s), at least a portion of the second fiber region is angularly disposed relative to at least a portion of one of the first fiber region(s) that is adjacent to the second fiber region (FIG. 5B). As shown, for example, the tape can be bent about each of two longitudinal axes, each of which is substantially aligned with the length of the tape and positioned at an interface between the first fiber region and a respective one of the second fiber regions such that both second fiber regions are angularly disposed relative to the first fiber region.

To achieve a desired part configuration (e.g. a desired lip), the tape can be shaped further. For example, at least one of (e.g., each of) the angularly disposed second fiber region(s) can be bent such that at least one section of the second fiber region is angularly disposed relative to another section of the second fiber region (FIG. 5C). As shown, the shaping of the tape can yield, for example, a lip that surrounds at least a majority (optionally all) of the planar portion (FIGs. 6A and 6B). The lip can include two or more lengthwise linear portions (e.g., 130a and 130b), two or more widthwise linear portions (e.g., 134a-134d), and four corner portions (e.g., 138a-138d). The lengthwise linear portions can extend in a first direction, and the widthwise linear portions can extend in a second direction that is perpendicular to the first direction. Each of the corner portions can connect one of the lengthwise linear portions to one of the widthwise linear portions and can, but need not, be rounded.

The method of making a PED housing can be performed such that each of the angularly disposed second fiber region(s) forms at least a portion of the lip, and the first fiber region(s) that are adjacent to the angularly disposed second fiber region(s) form at least a portion of the planar portion (FIG. 6C). As a result, the lip of the PED housing can exhibit different properties than the planar portion. For example, when fibers 14a are glass fibers, the planar portion can be RF transparent such that RF signals may pass through the planar portion. Fibers 14b can be carbon fibers or ceramic fibers such that the lip can be relatively stiff, compared to the planar portion, and provide rigidity for the PED housing.

These fibers, and the arrangement thereof in the PED housing, are provided by way of illustration; the part-making process can be performed using any of the present tapes to attain any suitable arrangement of fibers based on the design requirements of the PED housing. For example, the tape can comprise one or more fiber regions in which substantially all of the fibers are carbon fibers and can be shaped and/or sized such that at least one of such fiber region(s) defines a thermally and/or electrically conductive portion of the PED housing in at least a portion of the planar portion and/or lip (e.g., to dissipate heat and/or provide an integrated sensor).

By using a hybrid tape, a part having different properties in different portions thereof can be made more efficiently and with greater consistency compared to conventional methods. As described above, in conventional methods two or more separate tapes that comprise fibers of different types are joined (e.g., welded). However, parts made in this way may not be of consistent quality, at least because the different tapes may have different thicknesses and it can be difficult to position different tapes with an adequate level of precision. Additionally, because tape width can govern the throughput of the process, parts that may require relatively narrow tapes (e.g., for the lip of a PED housing) can be inefficient to produce. A hybrid tape (e.g., 10a-10c), by contrast, can have smaller thickness variations between the tape's different fiber regions, compared to those that may exist between different tapes, at least in part because tape formation and appropriate fiber positioning can be achieved in a single tape-making process. And, by incorporating different fiber types within a single tape, the part-making process may not require precise positioning of different tapes and may be more efficient even if at least one of the fiber regions is relatively narrow (e.g., because the overall width of the tape is larger than that of the fiber regions).

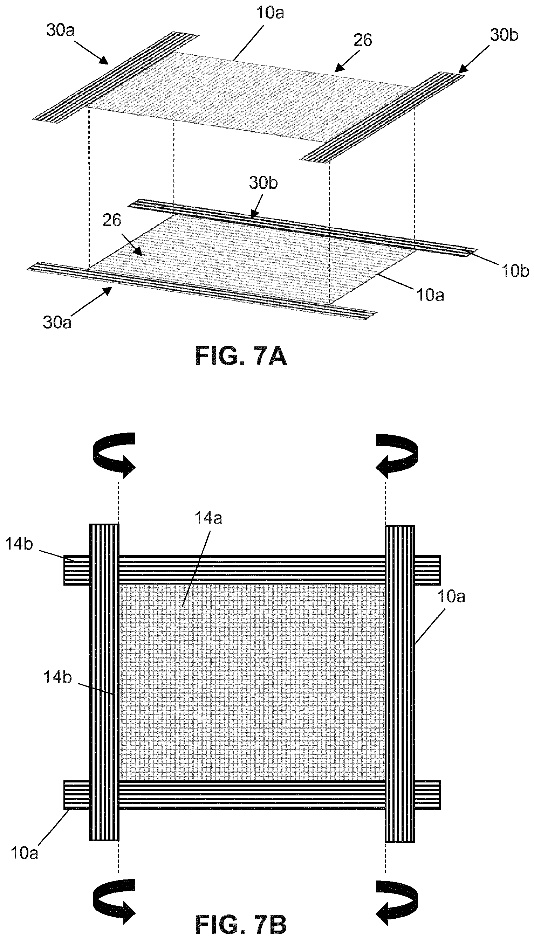

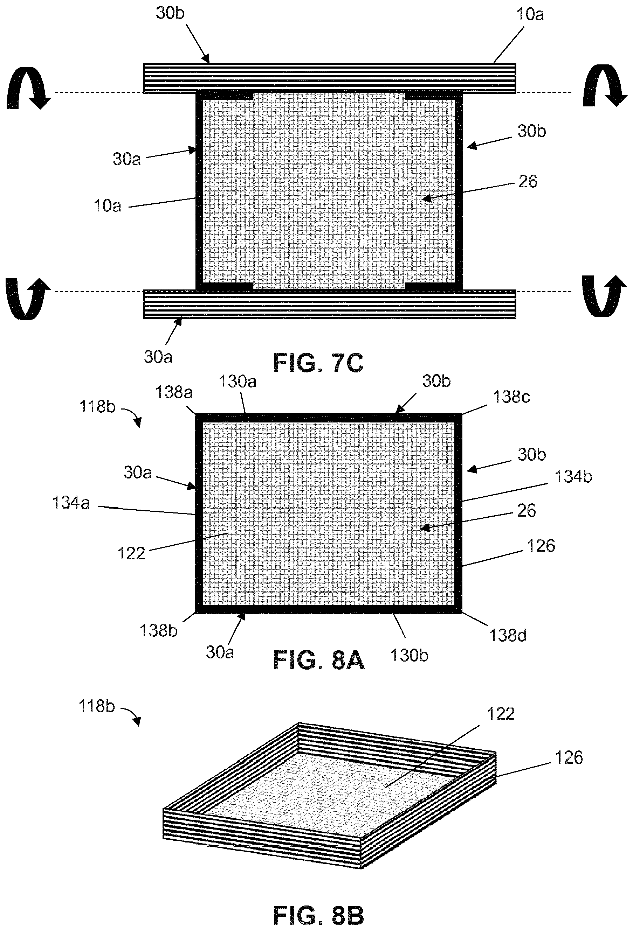

Referring to FIGs. 7A-7C and 8A-8B, in some methods a part (e.g. a PED housing) can be made at least by layering two or more hybrid tapes. The layered tapes can, but need not, have the same composition and arrangement of fibers in a cross-section, and can be layered such that the fibers of a first one of the tapes are aligned in a first direction and the fibers of a second one of the tapes are aligned in a second direction that is perpendicular to the first direction (FIG. 7A). The tapes can be shaped and/or sized to achieve the desired part configuration; for example, the second tape can be bent along its length to angularly dispose at least a portion of one or more of its second fiber region(s) (e.g., as described above with respect to FIGs. 5B and 5C) (FIG. 7B) and the same can be done for the first tape (FIG. 7C). The method can be performed such that the angularly disposed second fiber region(s) of the first tape at least partially overlap the angularly disposed second fiber region(s) of the second tape (FIGs. 8A and 8B), and at least one of the first fiber region(s) of the first tape at least partially overlaps at least one of the first fiber region(s) of the second tape. For example, when the part is a PED housing, the overlapping angularly disposed second fiber regions can form at least a portion (e.g., substantially all) of the lip of the PED housing and the overlapping first fiber regions can form at least a portion (e.g., substantially all) of the planar portion.

While, as shown, the two layered tapes have the same fiber composition and arrangement (e.g., for each, fibers 14a are glass fibers and fibers 14b are carbon fibers or ceramic fibers), in other embodiments, the tapes can have different fiber compositions and/or arrangements to achieve further localized variations in part characteristics. For example, fibers 14b of the first tape can be glass fibers instead of carbon fibers or ceramic fibers (e.g., the first tape can, but need not, comprise a single type of fibers), and the first tape can be bent such that the angularly disposed second fiber region(s) of the first tape form at least a portion of at least one (e.g., each) of the corner portions of the lip. Glass fibers, while less stiff, may better resist damage compared to carbon and ceramic fibers. The corner portion(s) of the lip that comprise glass fibers 14b of the first tape may accordingly be better able to withstand impacts that may regularly occur during use of the PED.

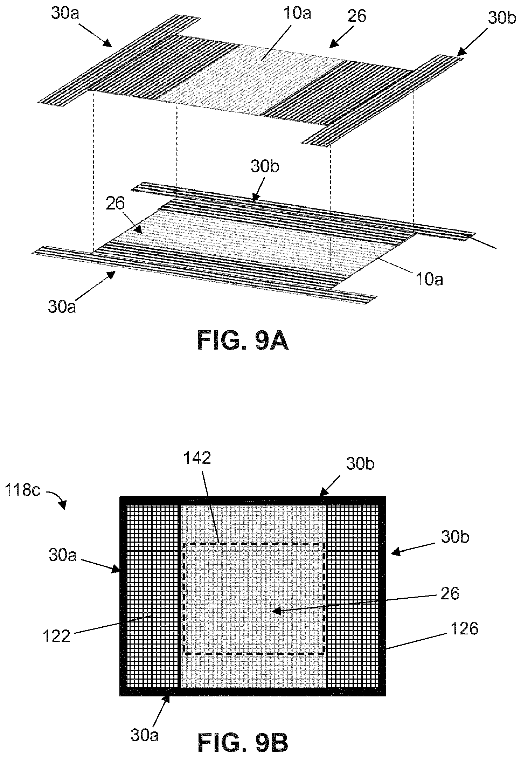

Referring to FIGs. 9A and 9B, the layered tapes can be sized and/or shaped such that, for at least one (e.g., each) of the tapes, a portion of each of the second fiber regions defines a portion of the planar portion. For example, as shown, fibers 14b of each of the tapes are carbon fibers such that a portion of the planar portion (e.g., the portion that is defined between the angularly disposed portions of the second fiber regions) can be thermally and/or electrically conductive (e.g., to facilitate heat transfer). The first fiber regions of the layered tapes can overlap to define a transmission region (e.g., 142) in the planar portion that can be RF transparent (e.g., when fibers 14a of each of the tapes are glass, ceramic, or the like fibers). In this manner, RF signals may be transmitted through the housing (e.g., through the transmission region) even if at least a majority of the PED housing is conductive. The fibers of the first and second tapes can be arranged to define a single or multiple transmission regions, each of which can be disposed at the center of the planar portion (e.g., as shown) or, alternatively, at a portion of the planar portion that is offset from the center. While the transmission region is described with respect to a PED housing having a planar portion and a lip, other parts made by layering two or more tapes can have one or more transmission regions in which RF transparent fiber regions of the tapes overlap.

Some of the present UD tapes comprise a polymeric matrix material and fibers dispersed within the matrix material, the fibers including fibers of a first type and fibers of a second type that is distinct from the first type, wherein the fibers are positioned such that a cross-section of the tape, taken perpendicularly to the length of the tape, includes one or more first fiber regions in which at least 90% of the fibers are of the first type and one or more second fiber regions in which at least 90% of the fibers are of the second type, wherein each of the first and second fiber regions has a width, measured in a direction aligned with the width of the cross-section, that is greater than or equal to 3 mm, and wherein the width of at least one of the first fiber region(s) is at least 2 times larger than the width of at least one of the second fiber region(s).

In some UD tapes, in the cross-section, the one or more second fiber regions comprise two or more second fiber regions, and, at each of the edges of the tape, one of the second fiber regions extends to the edge and has a width that is less than 25% of the width of the cross-section. In some UD tapes, each of the first and second fiber regions extends across the thickness of the cross-section.

In some UD tapes, the fibers of the second type have a modulus of elasticity that is at least 1.25 times larger than a modulus of elasticity of the fibers of the first type. In some UD tapes, the fibers of the second type comprise carbon fibers, glass fibers, aramid fibers, ceramic fibers, basalt fibers, polymer fibers, or natural fibers, and the fibers of the first type comprise carbon fibers, glass fibers, aramid fibers, ceramic fibers, basalt fibers, polymer fibers, or natural fibers. In some UD tapes, the fibers of the second type comprise carbon fibers or ceramic fibers. In some UD tapes, the fibers of the first type comprise ceramic fibers or glass fibers.

In some UD tapes, the fibers include fibers of a third type that is distinct from each of the first and second types, and the cross-section includes one or more third fiber regions in which at least 90% of the fibers are of the third type, each of the third fiber region(s) having a width, measured in a direction aligned with the width of the cross-section, that is greater than or equal to 3 mm.

Some of the present methods of making a part comprise shaping one of the present UD tapes at least by bending the UD tape along its length to angularly dispose at least a portion of one of the second fiber region(s) relative to at least a portion of one of the first fiber region(s) that is adjacent to the one of the second fiber region(s).

In some methods, the part is a PED housing that comprises a planar portion and a lip that extends from the planar portion, and the method is performed such that the angularly disposed second fiber region forms at least a portion of the lip, and the first fiber region that is adjacent to the angularly disposed second fiber region forms at least a portion of the planar portion.

Some of the present methods of making a UD tape comprise positioning two or more strands of fibers adjacent to one another, the strands including one or more first strands comprising fibers of a first type and one or more second strands comprising fibers of a second type that is distinct from the first type, and making a UD tape at least by introducing a polymeric matrix material to the fibers of the strands, wherein positioning the strands and introducing the polymeric matrix material to the fibers is performed such that a cross-section of the tape, taken perpendicularly to the length of the tape, includes one or more first fiber regions in which at least 90% of the fibers are of the first type and one or more second fiber regions in which at least 90% of the fibers are of the second type, wherein each of the first and second fiber regions has a width, measured in a direction aligned with the width of the cross-section, that is greater than or equal to 3 mm, and wherein the width of at least one of the first fiber region(s) is at least 2 times larger than the width of at least one of the second fiber region(s). Some methods comprise unwinding the strands from two or more spools, wherein the UD tape is coupled to the spools via the strands.

In some methods, positioning the strands and introducing the polymeric matrix material to the fibers is performed such that, in the cross section, the one or more second fiber regions comprise two or more second fiber regions, and, at each of the edges of the tape, one of the second fiber regions extends to the edge and has a width that is less than 25% of the width of the cross-section.

In some methods, the fibers of the second type have a modulus of elasticity that is at least 1.25 times larger than a modulus of elasticity of the fibers of the first type. In some methods, the fibers of the second type comprise carbon fibers or ceramic fibers, and the fibers of the first type comprise ceramic fibers or glass fibers.

### EXAMPLES

The present invention will be described in greater detail by way of specific examples. The following examples are offered for illustrative purposes only and are not intended to limit the invention in any manner. Those of skill in the art will readily recognize a variety of noncritical parameters that can be changed or modified to yield essentially the same results.

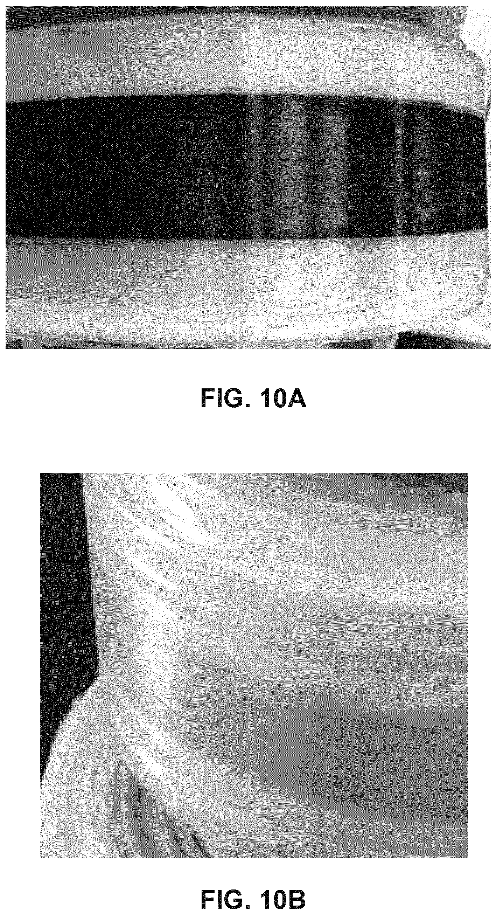

FIGs. 10A and 10B show first and second hybrid tapes, respectively, that were manufactured according to some of the present methods. Each of the tapes had a cross-section that included a single first fiber region and two second fiber regions, where each of the second fiber regions extended to a respective one of the lengthwise edges of the tape. The width of each of the tapes was 75 mm. TABLE 1 sets forth the fiber compositions, thicknesses, and fiber volume fractions of the first and second fiber regions for each of the tapes.

**TABLE 1: Fiber Characteristics and Thicknesses of Exemplary Hybrid Tapes**

| | **First Hybrid Tape (****FIG. 10A****)** | | **Second Hybrid Tape (****FIG. 10B****)** | |
|---|---|---|---|---|
| | First Fiber Region | Second Fiber Regions | First Fiber Region | Second Fiber Regions |
| **Fibers** | HM Carbon (580 tex) | HIPER-TEX Glass (2400 tex) | NEXTEL Ceramic (1111 tex) | HIPER-TEX Glass (2400 tex) |
| **Thickness (mm)** | 0.08 - 0.10 | 0.13 - 0.15 | 0.14 - 0.18 | 0.14 - 0.16 |
| **Fiber Volume Fraction (%)** | 42-50 | 34-40 | 37-39 | 34-40 |

The above specification and examples provide a complete description of the structure and use of illustrative embodiments. Although certain embodiments have been described above with a certain degree of particularity, or with reference to one or more individual embodiments, those skilled in the art could make numerous alterations to the disclosed embodiments without departing from the scope of this invention. As such, the various illustrative embodiments of the methods and systems are not intended to be limited to the particular forms disclosed. Rather, they include all modifications and alternatives falling within the scope of the claims, and embodiments other than the one shown may include some or all of the features of the depicted embodiment. For example, elements may be omitted or combined as a unitary structure, and/or connections may be substituted. Further, where appropriate, aspects of any of the examples described above may be combined with aspects of any of the other examples described to form further examples having comparable or different properties and/or functions, and addressing the same or different problems. Similarly, it will be understood that the benefits and advantages described above may relate to one embodiment or may relate to several embodiments.

The claims are not intended to include, and should not be interpreted to include, means-plus- or step-plus-function limitations, unless such a limitation is explicitly recited in a given claim using the phrase(s) "means for" or "step for," respectively.

## Claims

1. A unidirectional (UD) tape comprising:
a polymeric matrix material; and
fibers dispersed within the matrix material, the fibers including:
fibers of a first type; and
fibers of a second type that is distinct from the first type;
wherein the fibers are positioned such that a cross-section of the tape, taken perpendicularly to the length of the tape, includes:
one or more first fiber regions in which at least 90% of the fibers are of the first type; and
one or more second fiber regions in which at least 90% of the fibers are of the second type;
wherein each of the first and second fiber regions has a width, measured in a direction aligned with the width of the cross-section, that is greater than or equal to 3 millimeters (mm); and
wherein the width of at least one of the first fiber region(s) is at least 2 times larger than the width of at least one of the second fiber region(s).

2. The UD tape of claim 1, wherein the fibers of the second type have a modulus of elasticity that is at least 1.25 times larger than a modulus of elasticity of the fibers of the first type.

3. The UD tape of claim 1 or 2, wherein, in the cross-section:
the one or more second fiber regions comprise two or more second fiber regions; and
at each of the edges of the tape, one of the second fiber regions extends to the edge and has a width that is less than 25% of the width of the cross-section.

4. The UD tape of any of claims 1-3, wherein:
the fibers of the second type comprise carbon fibers, glass fibers, aramid fibers, ceramic fibers, basalt fibers, polymer fibers, or natural fibers; and
the fibers of the first type comprise carbon fibers, glass fibers, aramid fibers, ceramic fibers, basalt fibers, polymer fibers, or natural fibers.

5. The UD tape of claim 4, wherein the fibers of the second type comprise carbon fibers or ceramic fibers.

6. The UD tape of claim 4 or 5, wherein the fibers of the first type comprise ceramic fibers or glass fibers.

7. The UD tape of any of claims 1-6, wherein each of the first and second fiber regions extends across the thickness of the cross-section.

8. The UD tape of any of claims 1-7, wherein:
the fibers include fibers of a third type that is distinct from each of the first and second types; and
the cross-section includes one or more third fiber regions in which at least 90% of the fibers are of the third type, each of the third fiber region(s) having a width, measured in a direction aligned with the width of the cross-section, that is greater than or equal to 3 mm.

9. A method of making a part, the method comprising shaping a UD tape of any of claims 1-8 at least by bending the UD tape along its length to angularly dispose at least a portion of one of the second fiber region(s) relative to at least a portion of one of the first fiber region(s) that is adjacent to the one of the second fiber region(s).

10. The method of claim 9, wherein:
the part is a portable electronic device (PED) housing that comprises:
a planar portion; and
a lip that extends from the planar portion; and
the method is performed such that:
the angularly disposed second fiber region forms at least a portion of the lip; and
the first fiber region that is adjacent to the angularly disposed second fiber region forms at least a portion of the planar portion.

11. A method of making a unidirectional (UD) tape, the method comprising:
positioning two or more strands of fibers adjacent to one another, the strands including:
one or more first strands comprising fibers of a first type; and
one or more second strands comprising fibers of a second type that is distinct from the first type; and
making a UD tape at least by introducing a polymeric matrix material to the fibers of the strands;
wherein positioning the strands and introducing the polymeric matrix material to the fibers is performed such that a cross-section of the tape, taken perpendicularly to the length of the tape, includes:
one or more first fiber regions in which at least 90% of the fibers are of the first type; and
one or more second fiber regions in which at least 90% of the fibers are of the second type;
wherein each of the first and second fiber regions has a width, measured in a direction aligned with the width of the cross-section, that is greater than or equal to 3 millimeters (mm); and
wherein the width of at least one of the first fiber region(s) is at least 2 times larger than the width of at least one of the second fiber region(s).

12. The method of claim 11, wherein the fibers of the second type have a modulus of elasticity that is at least 1.25 times larger than a modulus of elasticity of the fibers of the first type.

13. The method of claim 11 or 12, wherein positioning the strands and introducing the polymeric matrix material to the fibers is performed such that, in the cross-section:
the one or more second fiber regions comprise two or more second fiber regions; and
at each of the edges of the tape, one of the second fiber regions extends to the edge and has a width that is less than 25% of the width of the cross-section.

14. The method of any of claims 11-13, wherein the fibers of the second type comprise carbon fibers or ceramic fibers, and the fibers of the first type comprise ceramic fibers or glass fibers.

15. The method of any of claims 11-14, comprising:
unwinding the strands from two or more spools;
wherein the UD tape is coupled to the spools via the strands.
